# EUROPÄISCHE PATENTSCHRIFT

(11) **EP 1 778 991 B1**
(45) Veröffentlichungstag und Bekanntmachung des Hinweises auf die Patenterteilung: **20.10.2010**
(21) Anmeldenummer: 05767929.2
(22) Anmeldetag: 19.07.2005
(51) Int. Cl.: F16C 33/64

(54) **WÄLZLAGER UMFASSEND WENIGSTENS EIN PRÄZISIONSTIEFGEZOGENES BAUTEIL MIT EINER LAUF- ODER FÜHRUNGSFLÄCHE FÜR WÄLZKÖRPER, SOWIE VERFAHREN ZUR HERSTELLUNG EINES SOLCHEN BAUTEILS**
ANTI-FRICTION BEARING COMPRISING AT LEAST ONE PRECISION DEEP-DRAWN COMPONENT WITH A RUNNING OR GUIDE SURFACE FOR ROLLING BODIES AND METHOD FOR PRODUCING A COMPONENT OF THIS TYPE
PALIER A ROULEMENTS COMPRENANT AU MOINS UN ELEMENT REALISE PAR EMBOUTISSAGE DE PRECISION ET DOTE D'UNE SURFACE DE ROULEMENT OU DE GUIDAGE POUR ELEMENTS DE ROULEMENT, PROCEDE POUR FABRIQUER UN ELEMENT DE CE TYPE

(30) Priorität: 20.08.2004 DE 102004040341
(43) Veröffentlichungstag der Anmeldung: 02.05.2007
(73) Patentinhaber: Schaeffler Technologies GmbH & Co. KG, 91074 Herzogenaurach (DE)
(72) Erfinder: GREINER, Heinz, 73061 Ebersbach (DE); GRELL, Karl-Ludwig, 91086 Aurachtal (DE)
(86) Internationale Anmeldenummer: PCT/EP2005/007826
(87) Internationale Veröffentlichungsnummer: WO 2006/021272

(56) Entgegenhaltungen:
- DE-A1- 10 020 118
- US-A- 3 374 040
- US-A- 4 437 214
- US-A- 4 696 083
- US-A- 5 848 846

## Beschreibung

### Gebiet der Erfindung

Die Erfindung betrifft ein Wälzlager umfassend wenigstens ein präzisions-tiefgezogenes Bauteil mit einer Lauf- oder Führungsfläche für Wälzkörper, welches Bauteil aus einem Kaltband aus Vergütungsstahl mit einem Kohlenstoffanteil von 0,30 - 0,55 % tiefgezogen und einsatzgehärtet ist. Die Erfindung betrifft auch ein Verfahren zur Herstellung eines solchen Bauteils.

### Hindergrund der Erfindung

Kaltgewalztes Stahlband, häufig Kaltband genannt, wird vielfach zur Herstellung von kaltumgeformten Erzeugnissen verwendet. Die steigenden Anforderungen bezüglich der Anwendungs- und Gebrauchseigenschaften erfordern bessere mechanische, insbesondere Umformeigenschaften. Dabei hat es sich als vorteilhaft erwiesen, wenn die Umformeigenschaften in den verschiedenen Richtungen, insbesondere in der Längs-, der Quer- und der Diagonalrichtung möglichst gleich sind, das heißt, weitgehend isotrop sind. Die Vorteile isotroper Eigenschaften drücken sich im Wesentlichen in einer Gleichmäßigkeit des Stoffflusses und einer Reduzierung des Blechverschnitts aus.

Solche kaltumgeformten Bauteile kommen beispielsweise bei Wälzlagern zum Einsatz. Je nach Ausgestaltung des Wälzlagers wird dabei beispielsweise die äußere Laufhülse, in die ein Käfig mit dem Wälzkörpern eingesetzt wird, wobei die Wälzkörper auf der inneren Lauf- oder Führungsfläche der Laufhülse laufen, in Form eines tiefgezogenen Teils hergestellt. Bei einer Lagerausführung mit einem Innenring kann auch der Innenring, auf dem ebenfalls die Wälzkörper laufen, entsprechend als tiefgezogenes Bauteil ausgebildet sein.

Dabei ist es bekannt, zur spanlosen Herstellung dieser Bauteile tiefziehfähiges Kaltband aus Einsatzstahl beispielsweise der Marke CK15 zu verwenden. Wenngleich sich dieser Einsatzstahl relativ gut tief ziehen lässt, weist er trotz nachfolgender Einsatzhärtung aufgrund der relativ geringen Einhärtetiefe keine hohe tragfähige Vergütungsfestigkeit in den tiefer gehenden Werkstoffschichten auf. Eine solche ist aber gerade bei Wälzlagern wünschenswert. Um eine hohe Kernfestigkeit bei solchen Bauteilen zu erhalten, wären sehr lange Härtezeiten erforderlich, was jedoch zum einen mit hohen Kosten verbunden und damit unwirtschaftlich ist, zum anderen beeinflusst eine zu hohe Einhärtetiefe die spätere Umformung der Bauteile, wie dies beispielsweise bei einem dünnwandigen Außenring für Nadellager erforderlich ist, nachdem der Käfig mit den Walzlagern eingesetzt wurde, um die Stirnseite zu schließen.

Aus DE 100 20 118 A1 ist ein besonderes Kaltband in Form eines Vergütungsstahls mit einem hohen Kohlenstoffanteil von 0,30 - 0,55 % und verschiedenen Legierungsbestandteilen bekannt, welches Band gegenüber bisher bekannten Kaltbändern im Hinblick auf die bei Bauteilen für Wälzlager geforderten Umformeigenschaften sowie die resultierenden mechanischen Eigenschaften deutlich verbesserte Grundeigenschaften aufweist. Diese Eigenschaften sind insbesondere auf den hohen Kohlenstoffanteil sowie die Zulegierung von Mo und Ni zurückzuführen. Die aus dem Kaltband gemäß DE 100 20 118 A1 gefertigten Wälzlagerbauteile, wie beispielsweise Hülsen bzw. Büchsen, werden mit oder ohne kompletter Befüllung mittels Kurzzeiterwärmung in einem Durchlaufhärteofen mit einer aufkohlenden Schutzatmosphäre innerhalb von wenigen Minuten, maximal 30 Minuten, austenitisiert, wobei eine geringe Entkohlung des Kaltbands mit dem ohnehin hohen Kohlenstoffanteil durch eine aufkohlende Schutzgasatmosphäre ausgeglichen wird. Der hohe Kohlenstoffanteil bzw. die Aufrechterhaltung durch die aufkohlende Schutzgasatmosphäre, gegebenenfalls auch eine verstärkte Zufuhr von Kohlenstoff oder Stickstoff mittels gezielter Aufkohlungsatmosphäre führt zu einer Oberflächenhärte am Endbauteil von mindestens 700 HV und einem bestimmten Volumenanteil von Restaustenit und Martensit im Gesamtgefüge. Die besonderen charakteristischen Eigenschaften dieses vergüteten Bauteils bestehen nun darin, dass auch die tiefer gehenden Werkstoffschichten, die während der gezielten Aufkohlung unbeeinflusst bleiben, da die Einhärtetiefe gering ist, aufgrund ihrer Legierungszusammensetzung eine tragfähige Vergütungsfestigkeit mit hinreichender Plastifizierbarkeit enthalten. Das heißt, auch die tiefer liegenden Werkstoffschichten weisen eine hohe Härte, also eine hohe Tragfestigkeit auf.

Wenngleich es möglich ist, unter Verwendung des in DE 100 20 118 A1 beschriebenen Kaltbands aus Vergütungsstahl der dort angegebenen Zusammensetzung präzise Bauteile mit hoher Vergütungsfestigkeit und Tragfähigkeit auch im Kern herzustellen, liegt der Erfindung das Problem zugrunde, unter Verwendung eines solchen Kaltbands aus DE 100 20 118 A1, Wälzlager bzw. Bauteile für Wälzlager herzustellen, die eine noch höhere Präzision im Bereich der "aktiven" Bauteilflächen aufweisen, und die neben einem verbesserten Geräuschverhalten auch eine längere Lebensdauer zeigen.

### Zusammenfassung der Erfindung

Zur Lösung dieses Problems ist bei einem Wälzlager umfassend wenigstens ein präzisions-tiefgezogenes Bauteil der eingangs genannten Art erfindungsgemäß vorgesehen, dass das Bauteil zumindest im Bereich der Lauf- oder Führungsfläche als auch die der Lauf- oder Führungsfläche gegenüberliegende Fläche des Bauteils materialabtragend nachbearbeitet ist.

Der Erfindung liegt die Erkenntnis zugrunde, dass - anders als bei Bauteilen aus anderen Kaltbändern als dem erfindungsgemäß verwendeten - ein materialabtragendes Nachbearbeiten nach dem Einsatzhärten möglich ist, ohne Nachteile hinsichtlich der Härte bzw. Kernfestigkeit in Kauf zu nehmen. Denn bei einem Bauteil aus diesem Kaltband weist der oberflächennahe Bereich an der Lauf- oder Führungsfläche aufgrund der Einsatzhärtung eine hohe Härte auf, auch die nachfolgenden Werkstoffschichten zeigen wie beschrieben eine große tragfähige Vergütungsfestigkeit. Dies ermöglicht es, oberflächlich materialabtragend die Oberfläche zu bearbeiten und zu vergüten, ohne dass der Materialabtrag sich nachteilig auf die Eigenschaften des Bauteils auswirkt. Denn ein geringer Abtrag an der Oberfläche der Lauf- oder der Führungsfläche führt dazu, dass der einsatzgehärtete Bereich je nach Bearbeitungstiefe teilweise oder ganz abgetragen wird, jedoch weisen wie beschrieben die darunter liegenden Werkstoffschichten gleichermaßen hervorragende Festigkeitseigenschaften auf, während gleichzeitig die Lauf- oder Führungsfläche optimiert wurde. Dies führt dazu, dass eine noch höhere Präzision im funktionsrelevanten Bauteilbereich der Lauf- oder Führungsfläche durch die Nachbearbeitung erreicht werden kann. Aufgrund der verbesserten Oberflächenqualität kann eine längere Lebensdauer erreicht werden. Auch verbessert sich das Geräuschverhalten, nachdem ein noch besseres Laufen der Wälzlager auf den Oberflächen möglich ist. Schließlich erniedrigen sich auch die Anforderungen an den Schmierstoff, es können längere Nachschmierintervalle angestrebt werden.

Um die über die Länge des tiefgezogenen Bauteils unvermeidlichen Geometriefehler, die aus dem Zieh- und Härteprozess stammen, auch im Bereich der der Lauf- oder Führungsfläche gegenüberliegenden Bauteilfläche zu beseitigen um so die geforderte geometrische Präzision einzuhalten, ist gemäß der Erfindung auch diese der Lauf- oder Führungsfläche gegenüberliegende Bauteilfläche materialabhebend, insbesondere spanend nachzubearbeiten. Denkbar ist beispielsweise die Bearbeitung durch Spitzenlosschleifen oder durch Schleifen in einer Futteraufnahme.

Bei dem erfindungsgemäßen Wälzlager kann es sich um ein solches handeln, das nur einen Außenring aufweist, in dem der Käfig mit den Wälzlagern, beispielsweise den Nadeln, läuft. In diesem Fall wäre der Außenring als Bauteil aus dem Kaltband hergestellt und materialabtragend nachbearbeitet. Handelt es sich bei dem Wälzlager um ein solches mit einem Außenring und einem Innenring, so sind zweckmäßigerweise beide Bauteile aus dem beschriebenen Kaltband hergestellt und, nachdem beide Lauf- oder Führungsflächen für die Wälzkörper aufweisen, an diesen Flächen materialabtragend nachbearbeitet.

Im Rahmen der materialabtragenden Nachbearbeitung der Lauf- oder Führungsflächen sind verschiedene abtragende Verfahren möglich. Zum einen kann eine spanabhebende Nachbearbeitung durch Schleifen oder Honen der Lauf- oder Führungsfläche erfolgen. Das heißt, die relevanten Flächen werden unter spanendem Materialabtrag mechanisch nachbearbeitet.

Alternativ zu diesen spanabhebenden, mechanischen Verfahren ist es auch denkbar, die Lauf- oder Führungsflächen in einem nicht-mechanischen Abtragverfahren nachzubearbeiten, wobei sich hierfür ein erosives Abtragen, beispielsweise durch Funken- oder Lichtbogenerosion, ein chemisches oder ein elektro-chemisches Abtragverfahren anbietet.

Das Verhältnis der Wanddicke des Bauteils zum Durchmesser der Wälzkörper sollte ≤ 0,8 sein, das heißt, die Wanddicke des Bauteils im Bereich seiner Lauf-oder Führungsfläche ist wesentlich kleiner als der Wälzkörperdurchmesser. Es handelt sich also um ein gegenüber dem Wälzkörper dünnwandiges Bauteil.

Neben dem Wälzlager selbst betrifft die Erfindung ferner ein Verfahren zur Herstellung eines Bauteils mit einer Lauf- oder Führungsfläche für ein Wälzlager der vorbeschriebenen Art. Dieses Verfahren zeichnet sich dadurch aus, dass das Bauteil nach dem Präzisions-Tiefziehen aus einem Kaltband aus Vergütungsstahl mit einem Kohlenstoffanteil von 0,30 - 0,55 % zunächst gehärtet und anschließend zumindest im Bereich der Lauf- oder Führungsfläche als auch die der Lauf- oder Führungsfläche gegenüberliegende Fläche des Bauteils zur Verbesserung der Bauteilpräzision materialabtragend nachbearbeitet wird. Als materialabtragende Verfahren bieten sich spanende Verfahren wie Schleifen oder Honen sowie nicht-mechanische Abtragverfahren an.

### Kurze Beschreibung der Zeichnungen

Weitere Vorteile, Merkmale und Einzelheiten der Erfindung ergeben sich aus der nachfolgenden Beschreibung von Ausbildungsbeispielen sowie anhand der Figuren. Die Figuren sind schematische Zeichnungen und zeigen:
- Fig. 1: eine Teilansicht eines erfindungsgemäßen Lagers einer ersten Ausführungsform im Schnitt, und
- Fig. 2: eine Teilansicht eines erfindungsgemäßen Lagers einer zweiten Ausführungsform im Schnitt.

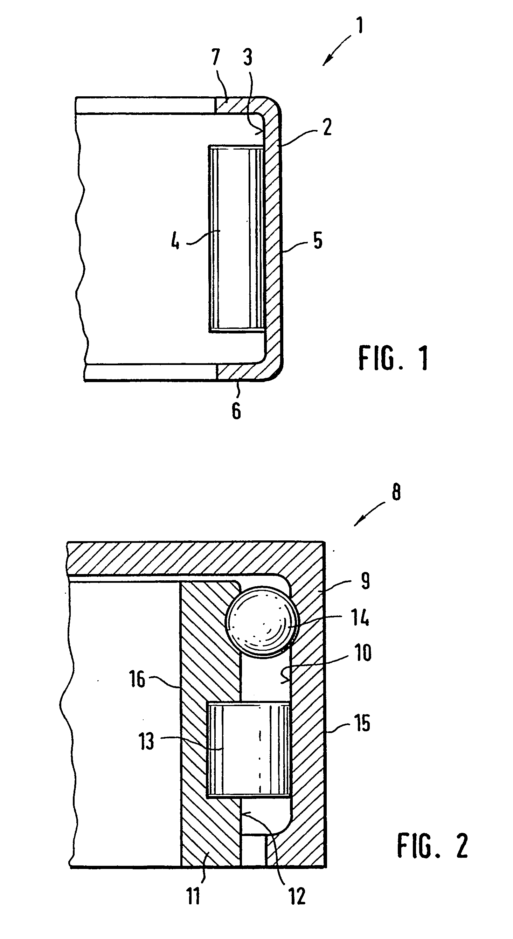

Fig. 1 zeigt in Form einer Prinzipdarstellung einer Teilansicht eines erfindungsgemäßen Wälzlagers 1 in einer Schnittansicht. Das Wälzlager 1, hier ein Nadellager, besteht aus einem Außenring oder einer Außenhülse 2, an deren Innenseite eine Lauf- oder Führungsfläche 3 ausgebildet ist, auf der Wälzkörper 4, die in einem nicht näher gezeigten Käfig gehalten sind, laufen. Die Außenhülse 2 weist den Radialabschnitt 5 auf, an den Stirnseiten sind Borde 6, 7 ausgebildet, die den Käfig samt den Wälzlagern einschließen.

Die Außenhülse 2 stellt ein im Sinne der Erfindung hergestelltes Bauteil aus einem Kaltband aus Vergütungsstahl dar. Nach dem Tiefziehen wird das Bauteil gehärtet und anschließend der Käfig mit den Wälzkörpern eingebracht, wonach der zweite Bord ausgeformt wird.

Der verwendete Vergütungsstahl, aus dem das Bauteil, also die Außenhülse 2, besteht, weist folgende chemische Zusammensetzungen auf:

| | |
|---|---|
| C | 0,30 - 055 % |
| Si | max. 0,15 % |
| Mn | 0,3 - 1,0 % |
| Mo | max. 0,15 % |
| Cr | max. 0,50 % |

| | |
|---|---|
| P | max. 0,015 % |
| S | max. 0,005 % |
| Cu | max. 0,20 % |
| Ni | max. 0,20 % |
| Sn | max. 0,005 % |
| Sb | max. 0,002 % |
| N₂ | 0,004 - 0,010 % |
| Fe | Rest, |

wobei Summe Cu, Ni, Mn, Cr 0,60 - 1,25 % und
Summe Al, Ti, Nb 0,002 - 0,080 %.

Mit einem Vergütungsstahl dieser Zusammensetzung ist es möglich, aufgrund seiner isotropen Eigenschaften sehr präzise tiefziehen zu können. Dieser Stahl kann sehr gut einsatzgehärtet werden, was bevorzugt bei einer Temperatur von 840 - 870° C für maximal 30 Minuten in einer aufkohlenden auf aufkohlenden/aufstickenden Schutzgradatmosphäre erfolgt. Gegebenenfalls kann anschließend nochmals kurz in einem Temperaturbereich von 180 - 280° angelassen werden. Hierdurch ist es möglich, die oberflächennahen Bereiche zu härten, es können Oberflächenhärten von ≥ 700 HV erreicht werden. Die Kernhärte, die allein aus der Materialzusammensetzung resultiert, bewegt sich im Bereich von bis zu 650 HV.

Bei dem erfindungsgemäßen Wälzlager 1 wird das auf diese Weise hergestellte Bauteil nun vor dem Einbringen des Käfigs mit den Wälzkörpern zumindest im Bereich der Lauffläche 3 materialabtragend nachbehandelt, das heißt, dort erfolgt eine materialabtragende Nachbearbeitung, um die Oberfläche weiter zu optimieren. Bevorzugt erfolgt dies durch Schleifen, also in einem spanenden Verfahren. Daran kann sich gegebenenfalls noch ein Schritt zum Finishen der Fläche anschließen. Erfindungsgemäß ist auch die radiale Außenseite 5 zur Einhaltung der geforderten Präzision/Toleranzen spanabhebend nachzubearbeiten. Erst danach erfolgt der Einsatz des Käfigs mit den Wälzkörpern 4, wonach der zweite Bord 7 (der Bord 6 wurde beispielsweise bereits während des Tiefziehens ausgebildet) hergestellt wird.

Fig. 2 zeigt ein weiteres erfindungsgemäßes Wälzlager 8. Dieses besteht aus einem Außenring 9 mit einer radial nach innen gerichteten Lauffläche 10 und einem Innenring 11 mit einer radial nach außen gerichteten Lauffläche 12 für die zwischen dem Außenring 9 und dem Innenring 11 laufenden Wälzkörper 13, 14, bei denen es sich zum einen um Zylinderrollen (Wälzkörper 13), zum anderen um Kugeln (Wälzkörper 14) handelt. Das Wälzlager ist also ein kombiniertes Lager aus einem Zylinderrollenlager und einem Vierpunktlager, wie es beispielsweise als Abschlussdeckel in Getrieben oder Motoren verwendet werden kann.

Bei diesem Lagertyp stellen der Außenring 9 und der Innenring 11 jeweils ein erfindungsgemäß hergestelltes Bauteil dar. Beide bestehen aus dem beschriebenen Kaltband der oben angegebenen Zusammensetzung. Auch sie sind an ihren Lauf- oder Führungsflächen 10, 12 nach ihrer separaten Präzisions-Tiefzieh-Herstellung und der Einsatzhärtung spanabhebend nachbearbeitet und gegebenenfalls gefinished, so dass die jeweiligen Lauf- oder Führungsflächen 10, 12 optimiert und von extrem hoher Präzision sind. Gleichermaßen sind auch die jeweiligen gegenüberliegenden Flächen 15, 16 beispielsweise durch Schleifen nachbearbeitet worden.

Bei allen Ausführungsbeispielen ändern sich die mechanischen Eigenschaften infolge der materialabtragenden Nachbearbeitung im Bereich der jeweiligen Laufflächen nicht oder nur unwesentlich, was wie bereits beschrieben auf die hervorragenden Eigenschaften des verwendeten Vergütungsstahls zurückzuführen ist, was erfindungsgemäß erkannt wurde und zur Optimierung und noch weiteren Erhöhung der Lagerpräzision vorteilhaft genutzt wird.

Abschließend ist darauf hinzuweisen, dass die Zusammensetzung des verwendeten Kaltbands auch in Abhängigkeit der Wanddicke des herzustellenden Bauteils, hier also der Außenhülse oder des Außen- und Innenrings, gewählt werden kann. Es bieten sich folgende Zusammensetzungen laut nachfolgender Tabelle an:

| Wanddicke | 0,6 - 1,1 mm | 1,1 - 1,8 mm | 1,8 - 3,5 mm |
|---|---|---|---|
| C | 0,30 - 0,40 % | 0,30 - 0,50 % | 0,40 - 0,55 % |
| Si | max. 0,10 % | max. 0,10 % | 0,10 % |
| Mn | 0,4 - 0,6 % | 0,6 - 0,8 % | 0,8 - 1,0 % |
| Mo | max. 0,05 % | max. 0,05 % | 0,15 % |
| Cr | 0,20 - 0,30 % | 0,20 - 0,30 % | 0,30 - 0,40 % |
| P | 0,015 % | 0,015 % | 0,015 % |
| S | 0,005 % | 0,005 % | 0,005 %. |

die Angaben zu den übrigen Zusammensetzungsanteilen, wie sie vorstehend zur Grundzusammensetzung angegeben sind, gelten auch hier.

Das Wälzlager kann als eigenständiges separates Teil ausgeführt sein, es kann aber auch an einem Drittgegenstand angeordnet oder integraler Bestandteil davon sein. Zu nennen ist hierzu beispielhaft ein Hülsenfreilauf mit integrierter Lagerung, bei dem in der Hülse ein Wälzlager integriert ist. Solche Hülsenfreiläufe mit Lagerung nehmen Drehmomente und zusätzlich radiale Kräfte durch das integrierte Wälzlager auf.

### Bezugszahlen

- 1: Wälzlager
- 2: Außenhülse
- 3: Führungsfläche
- 4: Wälzkörper
- 5: Radialabschnitt
- 6: Bord
- 7: Bord
- 8: Wälzlager
- 9: Außenring
- 10: Lauffläche
- 11: Innenring
- 12: Lauffläche
- 13: Wälzkörper
- 14: Wälzkörper
- 15: Fläche
- 16: Fläche

## Patentansprüche

1. Wälzlager umfassend wenigstens ein präzisions-tiefgezogenes Bauteil mit einer Lauf- oder Führungsfläche für Wälzkörper, welches Bauteil aus einem Kaltband aus Vergütungsstahl mit einem Kohlenstoffanteil von 0,30 - 0,55 % tiefgezogen und einsatzgehärtet ist, **dadurch gekennzeichnet, dass** das Bauteil zumindest im Bereich der Lauf- oder Führungsfläche als auch die der Lauf- oder Führungsfläche (3, 10, 12) gegenüberliegende Fläche (5, 15, 16) des Bauteils (2, 9, 11) materialabhebend nachbearbeitet ist.

2. Wälzlager nach Anspruch 1, **dadurch gekennzeichnet, dass** es zwei einander gegenüberliegende, über die Wälzkörper (13, 14) bewegungsgekoppelte präzisions-tiefgezogene Bauteil (9, 11) aus einem Kaltband aus Vergütungsstahl mit einem Kohlenstoffanteil von 0,30 - 0,55 % mit Lauf- oder Führungsflächen (10, 12) aufweist, deren Lauf- oder Führungsflächen (10, 12) materialabtragend nachbearbeitet sind.

3. Wälzlager nach Anspruch 1 oder 2, **dadurch gekennzeichnet, dass** die Lauf- oder Führungsfläche (3, 10, 12) und die gegenüberliegende Fläche in einem spanabhebenden Verfahren nachbearbeitet ist.

4. Wälzlager nach Anspruch 3, **dadurch gekennzeichnet, dass** die Lauf-oder Führungsfläche (3, 10, 12) geschliffen oder gehont ist.

5. Wälzlager nach Anspruch 1 oder 2, **dadurch gekennzeichnet, dass** die Lauf- oder Führungsfläche (3, 10, 12) in einem nicht-mechanischen Abtragverfahren nachbearbeitet ist.

6. Wälzlager nach Anspruch 5, **dadurch gekennzeichnet, dass** die Lauf-oder Führungsfläche (3, 10, 12) durch erosives, chemisches, oder elektro-chemisches Abtragen nachbearbeitet ist.

7. Wälzlager nach einem der vorangehenden Ansprüche, **dadurch gekennzeichnet, dass** das Verhältnis der Wanddicke des Bauteils (2, 9, 11) zum Durchmesser der Wälzkörper (4, 13, 14) ≤ 0,8 ist.

8. Wälzlager nach einem der vorangehenden Ansprüche, **dadurch gekennzeichnet, dass** es Teil eines Hülsenfreilaufs ist.

9. Verfahren zur Herstellung eines Bauteils mit einer Lauf- oder Führungsfläche für ein Wälzlager nach einem der Ansprüche 1 bis 8, welches nach dem Präzisions-Tiefziehen aus einem Kaltband aus Vergütungsstahl mit einem Kohlenstoffanteil von 0,30 - 0,55 % zunächst gehärtet wird, **dadurch gekennzeichnet, dass** das Bauteil anschließend zumindest im Bereich der Lauf- oder Führungsfläche materialabtragend nachbearbeitet wird, als auch die der Lauf- oder Führungsfläche gegenüberliegende Fläche materialabhebend nachbearbeitet wird.

10. Verfahren nach Anspruch 9, **dadurch gekennzeichnet, dass** die Lauf-oder Führungsfläche und die gegenüberliegende Fläche in einem spanabhebenden Verfahren nachbearbeitet wird.

11. Verfahren nach Anspruch 10, **dadurch gekennzeichnet, dass** die Lauf-oder Führungsfläche geschliffen oder gehont wird.

12. Verfahren nach Anspruch 9, **dadurch gekennzeichnet, dass** die Lauf-oder Führungsfläche in einem nicht-mechanischen Abtragverfahren nachbearbeitet wird.

13. Verfahren nach Anspruch 12, **dadurch gekennzeichnet, dass** die Lauf-oder Führungsfläche durch erosives, chemisches oder elektro-chemisches Abtragen nachbearbeitet wird.

## Claims

1. Rolling bearing comprising at least one precision-deep-drawn component having a running or guiding surface for rolling bodies, which component is deep-drawn from a cold strip of heat-treatable steel with a carbon proportion of 0.30 - 0.55% and is case-hardened, **characterized in that** the component is re-worked with material removal at least in the region of the running or guiding surface and also the surface (5, 15, 16), which is situated opposite the running or guiding surface (3, 10, 12), of the component (2, 9, 11).

2. Rolling bearing according to Claim 1, **characterized in that** it has two precision-deep-drawn components (9, 11) made from a cold strip of heat-treatable steel with a carbon proportion of 0.30 - 0.55%, which components are situated opposite one another and are coupled in terms of movement by means of the rolling bodies (13, 14) and have running or guiding surfaces (10, 12), the running or guiding surfaces (10, 12) of which components are re-worked with material removal.

3. Rolling bearing according to Claim 1 or 2, **characterized in that** the running or guiding surface (3, 10, 12) and the opposite surface are re-worked in a chip-removing process.

4. Rolling bearing according to Claim 3, **characterized in that** the running or guiding surface (3, 10, 12) is ground or honed.

5. Rolling bearing according to Claim 1 or 2, **characterized in that** the running or guiding surface (3, 10, 12) is re-worked in a non-mechanical material removal process.

6. Rolling bearing according to Claim 5, **characterized in that** the running or guiding surface (3, 10, 12) is re-worked by means of erosive, chemical or electrochemical material removal.

7. Rolling bearing according to one of the preceding claims, **characterized in that** the ratio of the wall thickness of the component (2, 9, 11) to the diameter of the rolling bodies (4, 13, 14) is ≤ 0.8.

8. Rolling bearing according to one of the preceding claims, **characterized in that** it is part of a sleeve-type freewheel.

9. Method for manufacturing a component having a running or guiding surface for a rolling bearing according to one of Claims 1 to 8, which component, after being precision-deep-drawn from a cold strip of heat-treatable steel with a carbon proportion of 0.30 to 0.55%, is initially hardened, **characterized in that** the component is subsequently re-worked with material removal at least in the region of the running or guiding surface, and the surface situated opposite the running or guiding surface is also re-worked with material removal.

10. Method according to Claim 9, **characterized in that** the running or guiding surface and the opposite surface are re-worked in a chip-removing process.

11. Method according to Claim 10, **characterized in that** the running or guiding surface is ground or honed.

12. Method according to Claim 9, **characterized in that** the running or guiding surface is re-worked in a non-mechanical material removal process.

13. Method according to Claim 12, **characterized in that** the running or guiding surface is re-worked by means of erosive, chemical or electrochemical material removal.

## Revendications

1. Palier de roulement comprenant au moins un composant embouti avec précision qui présente une surface de roulement ou de guidage des corps de roulement,
ce composant étant embouti dans un feuillard à froid en acier spécial dont la teneur en carbone est comprise entre 0,30 et 0,55 % et durci par cémentation, **caractérisé en ce que**
au moins dans la zone occupée par la surface de déplacement de guidage, le composant est usiné par enlèvement de matière dans la partie occupée par la surface de roulement ou de guidage ainsi que dans la surface (5, 15, 16) du composant (2, 9, 11) opposée à la surface de roulement ou de guidage (3, 10, 12).

2. Palier de roulement selon la revendication 1, **caractérisé en ce qu'**il présente deux composants (9, 11) emboutis avec précision mutuellement opposés et couplés à déplacement par l'intermédiaire des corps de roulement (13, 14), réalisés dans un feuillard à froid d'acier spécial dont la teneur en carbone est comprise entre 0,30 et 0,55 %, et présentant des surfaces de roulement ou de guidage (10, 12) dont les surfaces de roulement ou de guidage (10, 12) ont subi un usinage d'enlèvement de matière.

3. Palier de roulement selon les revendications 1 ou 2, **caractérisé en ce que** la surface de roulement ou de guidage (3, 10, 12) et la surface opposée sont usinées dans une opération d'enlèvement de matière.

4. Palier de roulement selon la revendication 3, **caractérisé en ce que** la surface de roulement ou de guidage (3, 10, 12) est meulée ou polie.

5. Palier de roulement selon les revendications 1 ou 2, **caractérisé en ce que** la surface de roulement ou de guidage (3, 10, 12) subit un traitement non mécanique d'enlèvement.

6. Palier de roulement selon la revendication 5, **caractérisé en ce que** la surface de roulement ou de guidage (3, 10, 12) est usinée par enlèvement de matière par érosion, enlèvement chimique ou enlèvement électrochimique.

7. Palier de roulement selon l'une des revendications précédentes, **caractérisé en ce que** le rapport entre l'épaisseur de paroi du composant (2, 9, 11) et le diamètre des corps de roulement (4, 13, 14) est ≤ 0,8.

8. Palier de roulement selon l'une des revendications précédentes, **caractérisé en ce qu'**il fait partie d'un système de rotation libre d'une douille.

9. Procédé de fabrication d'un composant doté d'une surface de roulement ou de guidage pour un palier de roulement selon l'une des revendications 1 à 8, qui est d'abord durci après emboutissage précis d'un feuillard à froid en acier spécial dont la teneur en carbone est comprise entre 0,30 et 0,55 %,
**caractérisé en ce que**
le composant est ensuite usiné par enlèvement de matière au moins dans la partie occupée par la surface de roulement ou de guidage et
**en ce que** la surface opposée à la surface de roulement ou de guidage subit un usinage par enlèvement de matière.

10. Procédé selon la revendication 9, **caractérisé en ce que** la surface de roulement ou de guidage et la surface opposée sont usinées dans une opération d'enlèvement de matière.

11. Procédé selon la revendication 10, **caractérisé en ce que** la surface de roulement ou de guidage est meulée ou polie.

12. Procédé selon la revendication 9, **caractérisé en ce que** la surface de roulement ou de guidage est usinée dans une opération d'enlèvement non mécanique de matière.

13. Procédé selon la revendication 12, **caractérisé en ce que** la surface de roulement ou de guidage est usinée par enlèvement de matière par érosion, enlèvement chimique ou enlèvement électrochimique.
